# EUROPÄISCHE PATENTSCHRIFT

(11) **EP 1 558 785 B1**
(45) Veröffentlichungstag und Bekanntmachung des Hinweises auf die Patenterteilung: **24.10.2007**
(21) Anmeldenummer: 03778245.5
(22) Anmeldetag: 03.11.2003
(51) Int. Cl.: C23C 18/16, C23C 18/31, C23C 18/42, C23C 18/50, C25D 5/50, C25D 3/50, C25D 3/12, C25D 15/00

(54) **VERFAHREN ZUM BESCHICHTEN EINES SUBSTRATS**
SUBSTRATE COATING METHOD
PROCEDE POUR ENDUIRE UN SUBSTRAT

(30) Priorität: 07.11.2002 DE 10251902
(43) Veröffentlichungstag der Anmeldung: 03.08.2005
(73) Patentinhaber: MTU Aero Engines GmbH, 80995 München (DE)
(72) Erfinder: DIETZ, Andreas, 38304 Wolfenbüttel (DE); KLUMPP, Gebhard, 38112 Braunschweig (DE); OLFE, Jürgen, 38543 Volkse (DE)
(74) Vertreter: Söllner, Oliver
(86) Internationale Anmeldenummer: PCT/DE2003/003645
(87) Internationale Veröffentlichungsnummer: WO 2004/042113

(56) Entgegenhaltungen:
- EP-A- 0 748 394
- WO-A-00/36180
- WO-A-94/19583
- DE-A- 3 716 935
- DE-A- 4 024 911
- SU-A- 1 803 480
- US-A- 4 895 625
- US-A- 5 935 407

## Beschreibung

Die Erfindung bezieht sich auf ein Verfahren zum Beschichten eines Substrats nach Anspruch 1, sowie auf einen beschichteten Gegenstand nach Anspruch 8. Bevorzugtes Anwendungsgebiet ist die Beschichtung von Bauteilen für Flugzeug- oder Gasturbinen oder für Müllverbrennungsanlagen mit temperaturbeständigen Schutzschichten gegen Hochtemperaturkorrosion.

Bauteile für den Einsatz in aggressiven, heißen und korrosiven Bedingungen werden meist aus speziellen Hochtemperaturlegierungen auf der Basis von Nickel oder Kobalt hergestellt. Diese Legierungen werden bei der Anwendung durch-Hochtemperaturkorrosion geschädigt. Durch die hohen Temperaturen und beschleunigt durch die Anwesenheit selbst kleinster Anteile von Chlor und Schwefel werden Nickel und Kobalt in ihre Oxide bzw. Sulfide umgewandelt. Die Oxide und Sulfide von Nickel und Kobalt sind aber nur lose mit dem metallischen Untergrund verbunden und platzen nach und nach ab.

Es ist bekannt, dass Nickel- und Kolbalt-Legierungen ab einem bestimmten Aluminiumanteil eine erhöhte Stabilität gegen Hochtemperaturkorrosion aufweisen. Diese Legierungen bilden bei hohen Temperaturen auf der Oberfläche eine stark anhaftende Schicht aus Aluminiumoxid aus, die sich von alleine regeneriert, wenn die Schicht verletzt wird. Um den Grundwerkstoff nach Festigkeitskriterien auswählen zu können, wurden Verfahren zur Diffusionsbeschichtung wie das Alitieren entwickelt, durch die die Grundlegierung im oberflächennahen Bereich nachträglich mit Aluminium angereichert werden kann.

Aus der US 3,102,044 ist ein Aluminisierungs-Verfahren bekannt, bei dem eine Schicht aus Aluminium auf dem Bauteil abgelagert wird. Bei der anschließenden Wärmebehandlung schmilzt das Aluminium und reagiert mit dem Substrat unter Ausbildung von NiAl.

Die EP 0 748 394 B1 beschreibt eine mit Platin angereicherte Aluminid-Beschichtung, die mit Silicium modifiziert ist. Zur Herstellung dieser Schicht wird auf der Oberfläche einer Nickel-Superlegierung in einem ersten Schritt Platin abgelagert. Anschließend wird eine wässrige Suspension von pulverisiertem elementarem Aluminium und Silicium aufgetragen und getrocknet. Zuletzt wird das Aluminium aufgeschmolzen, wobei sich das Silicium löst und Aluminium- und Silicium-Atome in das Substrat diffundieren.

Eine andere Schutzschicht gegen Hochtemperaturkorrosion besteht aus MCrAlY (M = Ni, Co; CrAlY = Chrom Aluminium Yttrium).

Die DE 35 35 548 C2 beschreibt ein Verfahren zur Herstellung einer MCrAlY-Beschichtung. Durch galvanische Dispersionsabscheidung wird eine Metallmatrix aus Ni oder Co mit eingelagerten Teilchen aus CrAlY erzeugt. Beim anschließenden Tempern entsteht dann die eigentliche Schutzschicht.

Aus der DE 40 24 911 A1 ist ein Verfahren zur Aufbringung ein dicken Oberflächenschicht bekannt, bei dem zunächst als Haftvermittler eine Nickelschicht auf eine Gasturbinenschaufel galvanisch aufgebracht wird. Anschließend wird gemäß diesem Verfahren Ni/Al-Pulver galvanisch-mechanisch in eine Ni-Matrix abgeschieden. Gemäß diesem Verfahren ist ferner vorgesehen, dass die Schaufel danach einer Diffusionsglühung unterzogen wird.

Aus der US 4,895,625 ist ein Beschichtungsverfahren bekannt, bei dem aus einem Kobalt und / oder Nickel sowie Chrom und / oder Aluminium enthaltenden elektrolytischen Bad eine Kobalt bzw. Nickel-Matrix mit eingebettetem Chrom bzw. Aluminium als Beschichtung auf einer Gasturbine aufgebracht und anschließend einer Wärmebehandlung unterzogen wird.

Aus der DE 37 16 935 A1 ist ein Verfahren zur elektrolytischen Herstellung einer Kobalt-TiSi₂-Schicht oder einer Nickel-TiSi₂-Schicht bekannt. Zu diesem Zweck wir in eine Kobalt- oder Nickelhaltige Elektrolytlösung eine Titan-Silizium-Verbindung eingebracht, wobei anschließend elektrolytisch eine Kobalt- oder Nickel- Schicht abgeschieden wird, in die homogen verteiltes TiSi₂ eingebunden ist. Anschließend wird hieraus durch Wärmebehandlung eine Kobalt-Titan-Silizium-Legierung bzw. eine Nickel-Titan-Silizium-Legierung erzeugt.

Aus der SU 1803480 ist ein elektrolytisches Abscheideverfahren bekannt bei dem Al- und W-Partikel in einer Ni- Matrix abgeschieden werden.

Der vorliegenden Erfindung liegt die Aufgabe zugrunde, bekannte Verfahren zur Herstellung von temperaturbeständigen Schutzschichten auf der Basis von aluminiumhaltigen Nickel, Kobalt und/oder Platin-Schichten zu vereinfachen und eine alternative Schutzschicht gegen Hochtemperaturkorrosion zur Verfügung zu stellen.

Diese Aufgabe wird durch die Merkmale der unabhängigen Ansprüche gelöst. Vorteilhafte Weiterbildungen des erfindungsgemäßen Verfahrens werden in den abhängigen Ansprüchen beschrieben.

Gegenstand der Erfindung ist ein Verfahren zum Beschichten eines Substrats, bei dem in einem ersten Schritt in einem als solchen bekannten Abscheidungsbad außenstromlos oder elektrolytisch Nickel, Kobalt und/oder Platin auf einem Substrat abgeschieden wird. Im Abscheidungsbad sind zusätzlich Partikel suspendiert, die mindestens ein Metall ausgewählt aus Magnesium, Aluminium, Zink enthalten, wobei die Partikel in die Beschichtung eingeschlossen werden. Diese Partikel sind Magnesium- bzw. Aluminium- bzw. Zink-Partikel mit einer Oxidschicht von mindestens 0,3 µm Dicke.

Bevorzugt, aber nicht zwingend, enthalten die Partikel kein Chrom. Im zweiten Schritt wird durch eine Wärmebehandlung die eigentliche Schutzschicht gegen Hochtemperaturkorrosion erzeugt.

Beim erfindungsgemäßen Verfahren kann die Reduktion der Metallsalze elektrolytisch, d. h. durch Anlegen einer äußeren Stromquelle, oder außenstromlos, d. h. durch die Zugabe von chemischen Reduktionsmitteln, erfolgen.

Bei der elektrolytischen Abscheidung sind keine chemischen Reduktionsmittel oder deren Reaktions- bzw. Abbauprodukte im Abscheidungsbad anwesend, die in die entstehende Metallschicht eingebaut werden können und diese verunreinigen. Werden z. B. phosphorhaltige Verbindungen eingebaut, entstehen während der Wärmebehandlung Phosphide, die die Schicht spröde und damit empfindlich machen.

Vorteilhaft ist weiterhin die höhere Abscheidungsgeschwindigkeit gegenüber der außenstromlosen Reduktion.

Bei stark verwinkelten Bauteilen kann durch die Abscheidung mit chemischen Reduktionsmitteln die Ausbildung einer Schicht mit gleichmäßiger Dicke auch an Kanten und anderen Flächenübergängen erreicht werden. Die elektrolytische Abscheidung liefert in solchen Fällen ungleichmäßige Schichtdicken, da das elektrische Feld aufgrund von Abschattungsprozessen inhomogen ist.

Neben den üblichen Bestandteilen für eine außenstromlose oder elektrolytische Abscheidung sind in den Abscheidungsbädern des erfindungsgemäßen Verfahrens Partikel suspendiert, die mindestens ein Metall ausgewählt aus Magnesium, Aluminium, Zink enthalten und die in die entstehende Metallschicht eingebaut werden.

Ein räumlich gleichmäßiger Einbau der Partikel wird durch eine homogene Verteilung der suspendierten Partikel im Abscheidungsbad erreicht, die durch verschiedene Maßnahmen wie z. B. rühren, schütteln oder Ultraschallanwendung sichergestellt werden kann. Durch den räumlich gleichmäßigen Partikeleinbau ist es möglich eine Schicht mit homogenen Eigenschaften herzustellen. Vorrichtungen und Verfahren, die dazu verwendet werden können sind z. B. in der GB 1 347 184 A und der GB 2 014 189 B beschrieben.

Im zweiten Verfahrensschritt wird das beschichtete Substrat einer Wärmebehandlung, bevorzugt bei 600 bis 800 °C, unterzogen. Während dieser Behandlung bildet sich eine Legierung, die die Elemente der außenstromlos oder elektrolytisch abgeschiedenen Schicht und die Elemente aus den Partikeln enthält. Außerdem diffundieren Atome aus der abgeschiedenen Schicht und den Partikeln in die Substratoberfläche, woraus eine bessere Haftung der Schicht am Substrat resultiert.

Die Mengenverhältnisse der abgeschiedenen Metalle und der Partikel werden bevorzugt so gewählt, dass stabile Phasen entstehen. Stimmen diese Verhältnisse nicht, bildet sich ein heterogenes zwei-phasiges Gemisch aus einer Legierungs- und einer Reinphase. Dieses Gemisch zeigt eine etwas weniger gute Beständigkeit gegen heiße Gase, da es durch interkristalline Korrosion angegriffen wird.

Werden aluminiumhaltige Partikel verwendet, enthält die wärmebehandelte Schutzschicht Platin, Nickel- und/oder Kobaltaluminide, die unter Hochtemperaturbedingungen in Gegenwart von Sauerstoff an der Oberfläche festhaftende und korrosionsbeständige Aluminiumoxidschichten ausbilden. Die Anwesenheit von Edelmetallen wie Platin in der Diffusionsschicht bewirkt die Ausbildung einer fehlerarmen Oxidschicht. Aluminium kann ganz oder teilweise auch durch Magnesium, Titan oder Zink ersetzt werden. Diese Metalle weisen die vorteilhafte Eigenschaft aus, bei hohen Temperaturen in Gegenwart von Sauerstoff festhaftende Oxidschichten auszubilden.

Das erfindungsgemäße Verfahren ist schnell, einfach und mit geringem anlagentechnischen Aufwand durchzuführen, weil alle notwendigen Elemente, die zur Ausbildung der Schutzschicht benötigt werden, in einem Arbeitsschritt auf das Substrat aufgebracht werden können.

Die nach dem erfindungsgemäßen Verfahren hergestellte Schutzschicht fällt so glatt aus, dass die Oberfläche nur wenig oder gar nicht nachgearbeitet werden muss. Eine glatte, aerodynamische günstige Oberfläche ist für Turbinenbauteile von großer Bedeutung, um einen hohen Wirkungsgrad zu erzielen.

Bei einer bevorzugten Ausführungsform des erfindungsgemäßen Verfahrens werden Partikel eingesetzt, die eine Oxidschicht aufweisen, die dicker ist als die unter normalen Umweltbedingungen ausgebildete Oxidschicht.

Eine Oxidschicht mit der angegebenen Dicke bewirkt eine stark verbesserte chemische Stabilität der Partikel in sauren und in basischen Abscheidungsbädern insbesondere im pH-Bereich zwischen 4 und 9. Die verwendeten Abscheidungsbäder können dadurch länger genutzt werden, bevor sie ausgetauscht werden müssen.

Außerdem schränkt die Verwendung dieser chemisch stabileren Partikel die Auswahl des verwendeten Abscheidungsbads nicht ein, da das Abscheidungsbad gewählt werden kann, das die Metallschichten mit den besten Eigenschaften liefert und nicht das Abscheidungsbad gewählt werden muss, in dem die verwendeten Partikel stabil sind.

Magnesium, Aluminium, Titan und Zink sind unedle Metalle, die unter sauren Bedingungen nicht stabil sind, sondern sich als Metallionen lösen. Aluminium und Zink lösen sich aufgrund ihres amphoteren Charakters auch unter basischen Bedingungen als Aluminat bzw. Zinkat. Die Auflösung der Partikel im Abscheidungsbad bewirkt, dass sich im Bad allmählich störende Fremdsubstanzen anreichern. Die auf ein optimales Abscheidungsergebnis hin eingestellten Bäder werden schleichend vergiftet. In der Folge nimmt der Wirkungsgrad der Abscheidung ab. Außerdem bilden sich immer porösere Schichten, da die zunehmende Wasserstoffentwicklung die Ausbildung einer glatten, einheitlichen Schicht hoher Dichte behindert.

Versuche habe gezeigt, dass Magnesium-, Aluminium- und Zink-Partikel mit einer Oxidschicht von mindestens 0,3 µm Dicke eine besonders gute chemische Stabilität aufweisen.

Es können bekannte Verfahren zur Herstellung der Oxidschicht eingesetzt werden. Das einfachste Verfahren ist die Reaktion der Metallpartikel mit heißem Wasser. Um die Dicke und Dichte der Oxidschicht zu verbessern, können inhibierende oder komplexierende Zusätze verwendet werden. Beispiele sind Carbonate, Silikate und Phosphate. Auch Oxidationsmittel wie z. B. Persulfatverbindungen oder Chromate können die Dicke und die Dichte der Oxidschicht erhöhen. Aluminium-Partikel werden bevorzugt nach dem Alrok-Verfahren, bei dem Natriumcarbonat und Kaliumdichromat zum Einsatz kommen, oder dem Erftwerk-Verfahren, bei dem Natriumcarbonat, -chromat und -silikat verwendet werden, mit einer Oxidschicht versehen.

Die Schichtdicke der Oxidhaut sollte dünn genug sein, damit das Partikel einen ausreichenden Anteil an elementarem Metall enthält, so dass die nachfolgende Legierungsbildung mit Nickel, Kobalt oder Platin nicht behindert wird.

Bei einer bevorzugten Ausführungsform des erfindungsgemäßen Verfahrens werden Magnesium-, Aluminium-, und/oder Zink-Partikel eingesetzt, die mit Nickel, Kobalt und/oder Platin legiert sind.

Diese Partikel haben den Vorteil, dass sie in sauren und basischen Abscheidungsbädern mit einem pH-Wert zwischen 3 und 10 relativ stabil sind. Wie vorstehend erläutert, kann dadurch unter einer größeren Anzahl an Abscheidungsbädern gewählt werden.

Außerdem können so weitere Bestandteile für die nachfolgende Legierungsbildung im Temper-Prozess in die Schicht eingebracht werden. Dadurch wird eine noch größere Wahlfreiheit bei der Auswahl des Abscheidungsbades ermöglicht, da die Bedingungen nur für die Abscheidung eines Metalls optimiert werden müssen.

Bei einer bevorzugten Ausführungsform des erfindungsgemäßen Verfahrens sind im Abscheidungsbad zusätzlich Silicium-Partikel suspendiert, die in die Beschichtung eingeschlossen werden.

Die wärmebehandelte, Silicium-modifizierte Schicht ist dehnbarer als Schichten ohne Silicium und zeigt daher eine geringere Tendenz zur Rissbildung.

Silicium kann auch dadurch in die Beschichtung eingebracht werden, dass mit Silicium legierte Magnesium-, Aluminium-, und/oder Zink-Partikel eingesetzt werden.

Außer von den eingesetzten Mengen ist das Verhältnis, in dem die Partikel in die Schicht eingebaut werden, von weiteren Parametern wie z. B. der Absetzgeschwindigkeit im Abscheidungsbad abhängig. Bei Partikeln, die Legierungen enthalten, ist dieses Mengenverhältnis von vornhinein festgelegt. Dadurch wird das bei der Verwendung von Partikeln aus unterschiedlichem Material auftretende Problem der unterschiedlichen Einbaurate in die Schicht umgangen.

Bei einer weiteren bevorzugten Ausführungsform des erfindungsgemäßen Verfahrens wird die Schicht bis zu einer Dicke von 10 bis 100 µm, bevorzugt 30 bis 70 µm, abgeschieden.

Versuche haben gezeigt, dass mit dem erfindungsgemäßen Verfahren hergestellte Schichten insbesondere mit einer Dicke von 10 bis 100 µm hervorragende Korrosionsbeständigkeit aufweisen.

Bei einer bevorzugten Ausführungsform des erfindungsgemäßen Verfahrens werden Partikel mit einem Durchmesser von 1 bis 50 µm, bevorzugt 5 bis 20 µm, verwendet.

Partikel dieser Größe können im Abscheidungsbad in homogener Verteilung suspendiert werden. Dadurch ist eine Voraussetzung für einen räumlich gleichmäßigen Einbau der Partikel in die abgeschiedene Schicht erfüllt.

Partikel, die kleiner als 1 µm sind, neigen in Suspension zur Aggregation, d. h. sie bilden Cluster aus. Größere Partikel als 50 µm führen selbst dann, wenn sie homogen suspendiert werden können - was mit zunehmender Größe immer schwieriger wird - zu einer ungleichmäßigen räumlichen Verteilung des Partikelmaterials in der Schicht, da sie im Vergleich zur 10 bis 100 µm dicken Schicht groß sind.

Grundsätzlich können Magnesium- und Aluminium-haltige Partikel aufgrund ihrer geringeren Dichte größer als Zink-haltige Partikel gewählt werde.

Anhand des folgenden Beispiels soll die Erfindung näher erläutert werden, ohne sie auf dieses Beispiel zu beschränken.

Komponenten eines Kühlsystems wurden heißgaskorrosionsfest beschichtet. Die Bauteile, die aus einer Ni-Basislegierung bestehen, wurden in einer Ultraschallreinigung entfettet, gebeizt und mit einer 0,5 µm dicken Schicht aus Anschlagnickel versehen. Mittels eines galvanischen Ni-Elektrolyten, der in einer Konzentration von 10 g/l Partikel mit einem Durchmesser von 3 µm aus einer A188Si12-Legierung enthielt, wurde eine Dispersionsschicht abgeschieden. Bei einer Stromdichte von 500 A/m² und mäßiger Elektrolyt- und Bauteilbewegung wurde eine Schicht von 30 µm Dicke aufgebracht. Durch REM-Messung (REM: Rasterelektronenmikroskop) konnte gezeigt werden, dass 25 Vol % der abgeschiedenen Schicht aus AlSi-Partikeln bestehen. Zur Ausbildung der gewünschten Legierungsschicht folgte ein zweistündiger Temperprozess bei 750°C.

## Patentansprüche

1. Verfahren zum Beschichten eines Substrats mit folgenden Schritten
a) außenstromloses oder elektrolytisches Abscheiden von Ni und/oder Co und/oder Pt in einem als solchen bekannten Abscheidungsbad, in dem zusätzlich Partikel suspendiert sind, die mindestens ein Metall ausgewählt aus Mg, Al und Zn enthalten, wobei die Partikel in die Beschichtung eingeschlossen werden, wobei die Partikel Magnesium- bzw. Aluminium- bzw. Zink-Partikel sind und eine Oxidschicht von mindestens 0,3 µm Dicke aufweisen
b) Wärmebehandeln des beschichteten Substrats

2. Verfahren nach Anspruch 1, **dadurch gekennzeichnet, dass**
die Partikel eine Oxidschicht aufweisen, die dicker ist als die unter normalen Umweltbedingungen ausgebildete Oxidschicht

3. Verfahren nach Anspruch 1 oder 2, **dadurch gekennzeichnet, dass**
die Partikel mit Ni und/oder Co und/oder Pt legiert sind

4. Verfahren nach mindestens einem der Ansprüche 1 bis 3, **dadurch gekennzeichnet, dass**
im Abscheidungsbad Silicium-Partikel suspendiert sind und in die Beschichtung eingeschlossen werden

5. Verfahren nach mindestens einem der Ansprüche 1 bis 4, **dadurch gekennzeichnet, dass**
die Partikel mit Si legiert sind

6. Verfahren nach mindestens einem der Ansprüche 1 bis 5, **dadurch gekennzeichnet, dass**
der Partikeldurchmesser 1 bis 50 µm beträgt.

7. Verfahren nach mindestens einem der Ansprüche 1 bis 6, **dadurch gekennzeichnet, dass**
die Schicht bis zu einer Dicke von 10 bis 100 µm abgeschieden wird

8. Beschichteter Gegenstand, herstellbar nach einem Verfahren gemäß einem der Ansprüche 1 bis 7

## Claims

1. A method for coating a substrate, comprising the following steps:
a) deposition electrolytically or without an external current of Ni and/or Co and/or Pt in a deposition bath known *per se,* in which in addition particles are suspended that contain at least one metal selected from Mg, Al and Zn, wherein the particles are enclosed in the coating, and wherein the particles are magnesium and/or aluminium and/or zinc particles and have an oxide layer at least 0.3 µm thick;
b) heat treatment of the coated substrate.

2. A method according to claim 1, **characterised in that** the particles have an oxide layer that is thicker than the oxide layer formed under normal ambient conditions.

3. A method according to claim 1 or 2, **characterised in that** the particles are alloyed with Ni and/or Co and/or Pt.

4. A method according to at least one of claims 1 to 3, **characterised in that** silicon particles are suspended in the deposition bath and are enclosed in the coating.

5. A method according to at least one of claims 1 to 4, **characterised in that** the particles are alloyed with Si.

6. A method according to at least one of claims 1 to 5, **characterised in that** the particle diameter is 1 to 50 µm.

7. A method according to at least one of claims 1 to 6, **characterised in that** the layer is deposited up to a thickness of 10 to 100 µm.

8. Coated article that can be produced by a process according to one of claims 1 to 7.

## Revendications

1. Procédé pour enduire un substrat avec les étapes suivantes consistant en :
a) Précipitation électrolytique ou sans courant parasite de Ni et/ou de Co et/ou de Pt dans un bain de précipitation connu comme tel dans lequel des particules contenant au moins un métal choisi parmi Mg, Al et Zn sont en plus en suspension, les particules étant incorporées dans le revêtement, et étant des particules de magnésium et/ou d'aluminium et/ou de zinc présentant une couche d'oxyde d'une épaisseur d'au moins 0,3 µm.
b) Traitement thermique du substrat enduit.

2. Procédé selon la revendication 1,
**caractérisé en ce que**
les particules présentent une couche d'oxyde plus épaisse que la couche d'oxyde formée en conditions environnementales normales.

3. Procédé selon la revendication 1 ou 2,
**caractérisé en ce que**
les particules sont alliées à Ni et/ou Co et/ou Pt.

4. Procédé selon l'une quelconque des revendications 1 à 3,
**caractérisé en ce que**
les particules de silicium sont en suspension dans le bain de précipitation et sont incorporées dans le revêtement.

5. Procédé selon au moins l'une quelconque des revendications 1 à 4,
**caractérisé en ce que**
les particules sont alliées avec Si.

6. Procédé selon au moins l'une quelconque des revendications 1 à 5,
**caractérisé en ce que**
le diamètre des particules est de 1 à 50 µm.

7. Procédé selon au moins l'une quelconque des revendications 1 à 6,
**caractérisé en ce que**
la couche est précipitée jusqu'à une épaisseur de 10 à 100 µm.

8. Objet enduit pouvant être fabriqué d'après un procédé selon l'une quelconque des revendications 1 à 7.
